Europäisches Patentamt

European Patent Office

Office européen des brevets

(19)

(11)    EP 1 224 765 B1

(12)        FASCICULE DE BREVET EUROPEEN

(45) Date de publication et mention
      de la délivrance du brevet:
      **21.09.2005  Bulletin 2005/38**

(21) Numéro de dépôt: **00971463.5**

(22) Date de dépôt: **13.10.2000**

(51) Int Cl.⁷: **H04L 9/30**

(86) Numéro de dépôt international:
      **PCT/FR2000/002880**

(87) Numéro de publication internationale:
      **WO 2001/028153 (19.04.2001 Gazette 2001/16)**

(54)    **PROCEDE DE CONTRE-MESURE DANS UN COMPOSANT ELECTRONIQUE METTANT EN OEUVRE UN ALGORITHME DE CRYPTOGRAPHIE A CLE PUBLIQUE DE TYPE RSA**

GEGENMASSNAHME IN EINEM ELEKTRONISCHEN BAUSTEIN ZUR AUSFÜHRUNG EINES KRYPTOALGORITHMUS MIT ÖFFENTLICHEM SCHLÜSSEL VOM RSA-TYP

COUNTERMEASURE METHOD IN AN ELECTRONIC COMPONENT WHICH USES AN RSA-TYPE PUBLIC KEY CRYPTOGRAPHIC ALGORITHM

(84) Etats contractants désignés:
      **DE ES FR GB IT**

(30) Priorité: **14.10.1999  FR 9912991**

(43) Date de publication de la demande:
      **24.07.2002  Bulletin 2002/30**

(73) Titulaire: **GEMPLUS**
      **13420 Gémenos (FR)**

(72) Inventeurs:
      • **CORON, Jean-Sébastien**
        **F-75015 Paris (FR)**
      • **PAILLIER, Pascal**
        **F-75020 Paris (FR)**

(56) Documents cités:
      **WO-A-98/52319**

## Description

La présente invention concerne un procédé de contre-mesure dans un composant électronique mettant en oeuvre un algorithme de chiffrement à clé publique de type RSA.

Dans le modèle classique de la cryptographie à clef secrète, deux personnes désirant communiquer par l'intermédiaire d'un canal non sécurisé doivent au préalable se mettre d'accord sur une clé secrète de chiffrement K. La fonction de chiffrement et la fonction de déchiffrement utilisent la même clef K. L'inconvénient du système de chiffrement à clé secrète est que ledit système requiert la communication préalable de la clé K entre les deux personnes par l'intermédiaire d'un canal sécurisé, avant qu'un quelconque message chiffré ne soit envoyé à travers le canal non sécurisé. Dans la pratique, il est généralement difficile de trouver un canal de communication parfaitement sécurisé, surtout si la distance séparant les deux personnes est importante. On entend par canal sécurisé un canal pour lequel il est impossible de connaître ou de modifier les informations qui transitent par ledit canal. Un tel canal sécurisé peut être réalisé par un câble reliant deux terminaux, possédés par les deux dites personnes.

Le concept de cryptographie à clef publique fut inventé par Whitfield DIFFIE et Martin HELLMAN en 1976. La cryptographie à clef publique permet de résoudre le problème de la distribution des clefs à travers un canal non sécurisé. Le principe de la cryptographie à clef publique consiste à utiliser une paire de clefs, une clef publique de chiffrement et une clef privée de déchiffrement. Il doit être calculatoirement infaisable de trouver la clef privée de déchiffrement à partir de la clef publique de chiffrement. Une personne A désirant communiquer une information à une personne B utilise la clef publique de chiffrement de la personne B. Seule la personne B possède la clef privée associée à sa clef publique. Seule la personne B est donc capable de déchiffrer le message qui lui est adressé.

Un autre avantage de la cryptographie à clé publique sur la cryptographie à clé secrète est que la cryptographie à clef publique permet l'authentification par l'utilisation de signature électronique.

La première réalisation de schéma de chiffrement à clef publique fut mise au point en 1977 par Rivest, Shamir et Adleman, qui ont inventé le système de chiffrement RSA. La sécurité de RSA repose sur la difficulté de factariser un grand nombre qui est le produit de deux nombres premiers. Depuis, de nombreux systèmes de chiffrement à clef publique ont été proposés, dont la sécurité repose sur différents problèmes calculatoires : (cette liste n'est pas exhaustive).

- " Sac à dos " de Merckle-Hellman :

    Ce système de chiffrement est basé sur la difficulté du problème de la somme de sous-ensembles ;

- McEliece :

    Ce système de chiffrement est basé sur la théorie des codes algébriques. Il est basé sur le problème du décodage de codes linéaires ;

- ElGamal :

    Ce système de chiffrement est basé sur la difficulté du logarithme discret dans un corps fini ;

- Courbes elliptiques:

    Le système de chiffrement à courbe elliptique constitue une modification de systèmes cryptographiques existant pour les appliquer au domaine des courbes elliptiques. L'avantage des systèmes de chiffrement à courbes elliptiques est qu'ils nécessitent une taille de clef plus petite que pour les autres systèmes de chiffrement.

Le système de chiffrement RSA est le système de chiffrement à clé publique le plus utilisé. Il peut être utilisé comme procédé de chiffrement ou comme procédé de signature. Le système de chiffrement RSA est utilisé dans les cartes à puce, pour certaines applications de celles-ci. Les applications possibles de RSA sur une carte à puce sont l'accès à des banques de données, des applications bancaires, des applications de paiements à distance comme par exemple la télévision à péage, la distribution d'essence ou le paiement de péages d'autoroute.

Le principe du système de chiffrement RSA est le suivant. Il peut être divisé en trois parties distinctes qui sont :

    1) La génération de la paire de clés RSA
    2) Le chiffrement d'un message clair en un message chiffré, et
    3) Le déchiffrement d'un message chiffré en un message clair.

La première partie est la génération de la clef RSA. Chaque utilisateur crée une clé publique RSA et une clé privée correspondante, suivant le procédé suivant en 5 étapes :

    1)Générer deux nombres premiers distincts p et q de même taille
    2) Calculer n=pq et $\rfloor$=(p-1)(q-1)
    3) Sélectionner aléatoirement un entier e, 1<e<$\rfloor$, tel que pgcd(e, $\rfloor$)=1
    4)Calculer l'unique entier d, 1<d<$\rfloor$ tel que e*d=1 mod $\rfloor$
    5)La clé publique est (n,e); la clé privée est d ou (d,p,q)

Les entiers e et d sont appelés respectivement exposant de chiffrement et exposant de déchiffrement. L'entier n est appelé le module.

La seconde partie de la génération à clé RSA consiste au chiffrement d'un message clair noté m au moyen d'un algorithme avec 1<m<n en un message chiffré noté c est le suivant :

Calculer c=m^e mod n.

La troisième partie de la génération de la clé RSA consiste au déchiffrement utilisant l'exposant privé d de déchiffrement au moyen d'un algorithme. L'algorithme de déchiffrement d'un message chiffré noté c avec 1<c<n en un message clair noté m est le suivant :

Calculer m=c^d mod n.

L'algorithme de déchiffrement RSA précédemment décrit peut s'effectuer par deux méthodes différentes. Ces deux méthodes sont : déchiffrement avec CRT et déchiffrement sans CRT. CRT est un acronyme pour Chinese Remainder Theorem. L'avantage de l'algorithme de déchiffrement avec CRT est qu'il est théoriquement 4 fois plus rapide que l'algorithme de déchiffrement sans CRT. L'algorithme de déchiffrement sans CRT consiste à calculer m=c^d mod n comme décrit précédemment.

L'algorithme de déchiffrement avec CRT consiste en les 4 étapes suivantes :

1)Calculer cp=c modulo p et cq=c modulo q
2)Calculer dp=d modulo p-1 et dq=d modulo q-1
3)Calculer mp=cp^dp modulo p et mq=cq^dq modulo q
4) Calculer m=mp*q* (q^ (-1) mod p) +mq*p* (p^ (-1) mod q)

Pour réaliser les exponentiations modulaires nécessaires dans les procédés de calcul décrits précédemment, plusieurs algorithmes existent :

- Algorithme appelé " square and multiply ";
- Algorithme avec chaines d'addition;
- Algorithme avec fenêtre;
- Algorithme avec représentation signée.

Cette liste n'est pas exhaustive. L'algorithme le plus simple et le plus utilisé est l'algorithme " square and multiply ". L'algorithme " square and multiply " prend en entrée un nombre c, un exposant d et un module n. L'exposant d est noté d=(d(t), d(t-1), d(0)), où (d(t), d(t-1),, d(0)) étant la représentation binaire de d, avec d(t) le bit de poids fort et d(0) le bit de poids faible.

Par exemple la représentation du nombre cinq en binaire est 101, provenant du fait que 5=1*2^2+0*2^1+1*2^0. Le premier 1 est le bit de poids fort et le dernier 1 le bit de poids faible. L'algorithme retourne en sortie le nombre m=c^d mod n.

L'algorithme " square and multiply " comporte les 3 étapes suivantes :

1) Initialiser une variable entière A avec la valeur c ;
2) Pour i allant de t-1 à 0 faire:

2a) Remplacer A par A*A mod n ;
2b) Si d(i)=1 remplacer A par A*c mod n ;

3) Retourner à l'étape 1 ci-dessus.

Dans le cas du déchiffrement RSA sans CRT, le déchiffrement s'effectue comme décrit précédemment en utilisant l'algorithme " square and multiply ". Dans ce cas, l'algorithme " square and multiply " prend donc en entrée le message chiffré c, le module n et l'exposant de déchiffrement d.

Dans le cas du déchiffrement RSA avec CRT, le déchiffrement s'effectue comme décrit précédemment en utilisant deux fois l'algorithme " square and multiply " pour l'exécution de l'étape 3) de l'algorithme de déchiffrement avec CRT. La première fois, l'algorithme prend en entrée l'entier cp, le module p et l'exposant dp. La deuxième fois, l'algorithme prend en entrée l'entier cq, le module q et l'exposant dq.

Il est possible d'effectuer ces opérations à l'intérieur d'une carte à puce, lesdites opérations étant effectuées par le microprocesseur de la carte à puce. Il est apparu que l'implémentation sur carte à puce d'un algorithme de chiffrement à clé publique du type RSA était vulnérable à des attaques consistant en une analyse différentielle de consommation de courant permettant de retrouver la clé privée de déchiffrement. Ces attaques sont appelées attaques DPA, acronyme pour Differential Power Analysis. Le principe de ces attaques DPA repose sur le fait que la consommation de courant du microprocesseur exécutant des instructions varie selon la donnée manipulée.

En particulier, lorsqu'une instruction manipule une donnée dont un bit particulier est constant, la valeur des autres bits pouvant varier, l'analyse de la consommation de courant liée à l'instruction montre que la consommation moyenne de l'instruction n'est pas la même suivant que le bit particulier prend la valeur 0 ou 1. L'attaque de type DPA permet donc d'obtenir des informations supplémentaires sur les données intermédiaires manipulées par le microprocesseur de la carte lors de l'exécution d'un algorithme cryptographique.Ces informations supplémentaires peuvent dans certain cas permettre de révéler les paramètres privés de l'algorithme de déchiffrement,rendant le système cryptographique non sûr.

Dans la suite de ce document il sera décrit deux types d'attaque DPA sur l'algorithme de déchiffrement RSA. La première attaque DPA décrite concerne l'algorithme de déchiffrement RSA sans CRT. La deuxième attaque décrite concerne l'algorithme de déchiffrement RSA avec CRT. Ces deux attaques permettent de révéler l'exposant privé de déchiffrement d. Elles compromettent donc gravement la sécurité de l'implémentation de RSA sur une carte à puce.

La première attaque DPA concerne l'algorithme de déchiffrement RSA sans CRT. L'attaque permet de révéler directement l'exposant secret d, appelé aussi clé privée.

La première étape de l'attaque est l'enregistrement de la consommation de courant correspondant à l'exécution de l'algorithme " square and multiply " décrit précédemment pour N messages chiffrés distincts c(1),...,c(N).

Pour la clarté de la description de l'attaque, on commence par décrire une méthode permettant d'obtenir la valeur du bit d(t-1) de la clé privée d, ou (d(t), d(t-1), d(0)) la représentation binaire de d, avec d(t) le bit de poids fort et d(0) le bit de poids faible. On donne ensuite la description d'un algorithme qui permet de retrouver la valeur de d.

On groupe les messages c(1) à c(N) suivant la valeur du bit de poids faible de c^4 mod n, où c désigne un des messages c(1) à c(N). Le premier groupe est constitué des messages c tels que le bit de poids faible de c^4 mod n est égal à 1.

Le deuxième groupe est constitué des messages c tels que ledit bit est égal à 0. On calcule la moyenne des consommations de courant correspondant à chacun des deux groupes, et on calcule la courbe de différence entre ces deux moyennes.

Si le bit d(t-1) de d est égal à 0, alors l'algorithme d'exponentiation précédemment décrit calcule et met en mémoire la valeur de c^4 mod n. Cela signifie que lors de l'exécution de l'algorithme dans une carte à puce, le microprocesseur de la carte va effectivement calculer c^4 mod n. Dans ce cas, dans un groupe de messages le dernier bit de la donnée manipulée par le microprocesseur est toujours égal à 1, et, dans l'autre groupe de messages le dernier bit de la donnée manipulée est toujours égal à 0. La moyenne des consommations de courant correspondant à chaque groupe est donc différente. Il apparaît donc dans la courbe de différence entre les deux moyennes un pic de différentiel de consommation de courant.

Si au contraire le bit d(t-1) de d est égal à 1, l'algorithme d'exponentiation décrit précédemment ne calcule pas la valeur de c^4 mod n. Lors de l'exécution de l'algorithme par la carte à puce, le microprocesseur ne manipule donc jamais la donnée c^4 mod n. Il n'apparaît donc pas de pic de différentiel de consommation.

Cette méthode permet donc de déterminer la valeur du bit d(t-1) de d.

L'algorithme décrit dans le paragraphe suivant est une généralisation de l'algorithme précédent. Il permet de déterminer la valeur de la clé privée d :

L'algorithme prend en entrée N messages c(1) à c(N) et le module RSA n, et renvoie en sortie un entier h. Les étapes de l'algorithme ci-dessus sont les suivantes :

     1) Mettre 1 dans la variable h,
     2) Pour i allant de t-1 à 1 exécuter les étapes:

         2)1) Classer les messages c(1) à c(N) en deux groupes suivant la valeur du dernier bit de c^(4*h) mod n ;
         2)2) Calculer la moyenne de consommation de courant pour chacun des 2 groupes ;
         2)3) Calculer la différence entre les deux moyennes ;
         2)4) Si la différence fait apparaître un pic de différentiel de consommation, calculer h=h*2 ;

     Sinon exécuter h=h*2+1.

Le résultat de l'algorithme est contenu dans la variable h.

L'algorithme précédent fournit un entier h tel que d=2*h ou d=2*h+1. Pour obtenir la valeur de d, il suffit ensuite de tester les deux hypothèses possibles qui sont d=2*h et d=2*h+1. L'attaque de type DPA décrite permet donc de retrouver la clé privée d lorsque l'algorithme de déchiffrement RSA est effectué sans CRT.

La seconde attaque DPA possible sur l'algorithme de déchiffrement RSA concerne l'application de l'algorithme de déchiffrement avec CRT comme décrit précédemment.
L'attaque décrite se fait à message choisi et porte exclusivement sur l'opération de réduction modulaire (étape 1) dans la description de l'algorithme de déchiffrement avec CRT.

L'attaque consiste à envoyer à la carte des messages correctement choisis. La taille de la représentation binaire de p est un entier k. On a donc 2^(k-1)<p<2^k. On distingue alors deux cas :

     Dans le premier cas, on a 2^(k-1)+2^(k-2)<p<2^k. Dans le deuxième cas, on a 2^(k-1)<p<2^(k-1)+2^(k-2).

La méthode consiste à faire déchiffrer par la carte un premier groupe A de messages c tels que c<2^(k-1). La réduction modulaire de c modulo p donne donc exactement l'entier c comme résultat. On donne aussi à déchiffrer par la carte un second groupe B de messages c tels que 2^k<c<2^k+2^(k-2) dans le premier cas, et 2^(k-1)+2^(k-2)<c<2^k dans le deuxième cas. Dans les deux cas, la réduction modulaire de c modulo p donne c-p. La carte va donc manipuler par la suite la donnée c-p. En analysant la différence de consommation entre les messages du groupe A pour lesquels le résultat est c et les messages du groupe B pour lesquels le résultat est c-p, il est possible par comparaison de connaître toute l'information nécessaire permettant d'obtenir p.

On donne dans ce paragraphe la méthode permettant d'obtenir le bit de poids faible de p. La méthode est similaire pour obtenir les autres bits de p. On classe les messages du groupe A en deux catégories : un groupe de message A0 pour lequel le dernier bit des messages est égal à 0 et un groupe de message A1 pour lequel le dernier bit est égal à 1. On réalise la même opération pour le groupe B, obtenant le groupe B0 et le groupe B1. Si le bit de poids faible de p est égal à 1, la différence de consommation entre le groupe A0 et B0 fera apparaître un pic de différentiel de consommation car dans le groupe A0 le dernier bit du résultat est égal à 0 et dans le groupe B0 le dernier bit du résultat est égal à 1. Si le bit de poids faible de p est égal à 0, la différence de consommation moyenne entre les groupes ne fait pas apparaître de pics. Par cette méthode on peut déterminer le bit de poids faible de p. Par une méthode similaire on peut déterminer successivement les bits de p.

Le procédé de l'invention consiste en l'élaboration de deux contre-mesures permettant de se prémunir contre les 2 types d'attaque DPA décrits précédemment (attaque avec CRT et attaque sans CRT). Le procédé de la première contre-mesure consiste à effectuer les calculs modulo p*r et q*t, r et t étant des nombres aléatoires. Le procédé de la première contre-mesure constitue en une amélioration d'un procédé déjà existant, présenté dans la demande de brevet WO 99/35782 déposé par la société Cryptography Research. Dans cette demande de brevet, une méthode permettant de se prémunir contre les attaques de type DPA lors de l'opération de déchiffrement RSA est décrite. L'inconvénient de cette méthode est qu'elle nécessite la mise en oeuvre de divisions d'entiers, opérations difficiles à réaliser à l'intérieur d'un objet portable du type carte à puce. Le procédé de la première contre-mesure comprend uniquement les opérations d'addition et de multiplication. La seconde contre-mesure consiste à rendre aléatoire la recombinaison utilisant le théorème du reste chinois ou CRT.

Le procédé de la première contre-mesure consiste à utiliser un module de calcul aléatoire à chaque nouvelle exécution de l'algorithme de déchiffrement avec CRT. Il consiste à effectuer les calculs modulo p*r et q*t, où r et t sont des nombres aléatoires.

Ce procédé prend en entrée un message c, un exposant de déchiffrement d et un paramètre de sécurité s et comprend les huit étapes suivantes :

    1) Tirage de trois nombres aléatoires r, t et u compris entre 0 et 2^s;
    2) Calcul de p'=p*r et q'=q*t;

    3) Remplacer c par c+u*n
    4) Calculer cp=c modulo p' et cq=c modulo q' ;
    5) Calculer dp=d' modulo p-1 et dq=d' modulo q-1 ;
    6) Calculer mp'=cp^dp modulo p' et mq'=cq^dq modulo q' ;
    7) Calculer m=((mq-mp)*(p^(-1) mod q) mod q')*p +mp
    8) Remplacer m par m mod n.

Le procédé de la première contre-mesure comprend deux variantes qui concernent la mise à jour des entiers r et t. La première variante consiste en ce qu'un nouveau couple d'entiers r et t est calculé à chaque nouvelle exécution de l'algorithme de déchiffrement, selon le procédé décrit précédemment. La seconde variante consiste en ce qu'un compteur est incrémenté à chaque nouvelle exécution de l'algorithme de déchiffrement. Lorsque ce compteur atteint une valeur fixée T, un nouveau couple d'entiers r et t est calculé selon le procédé décrit précédemment, et le compteur est remis à 0. Dans la pratique, on peut prendre T=16.

Le procédé de la première contre-mesure comprend une troisième variante utile lorsque la taille des opérations sur les entiers est limitée. Cette troisième variance comprend les étapes suivantes :

    1) Tirage de quatre nombres aléatoires r, t, u et v compris entre 0 et 2^s ;
    2) Calcul de p'=p*r et q'=q*t ;
    3) Calculer cp=c modulo p' et cq=c modulo q' ;
    4) Remplacer cp par cp+u*p et remplacer cq par cq+v*q.
    5) Calculer dp=d' modulo p-1 et dq=d' modulo q-1 ;
    6) Calculer mp'=cp^dp modulo p' et mq'=cq^dq modulo q' ;
    7) Calculer m=(((mq-mp)*(p^(-1) mod q) mod q')*p mod n) +mp mod n
    8) Remplacer m par m mod n.

Le procédé de la première contre-mesure comprend une quatrième variante permettant d'augmenter la sécurité des opérations. Dans cette quatrième variante, une partie du déchiffrement est réalisée modulo p et modulo q en utilisant le théorème du reste chinois et une partie du déchiffrement est calculée modulo n. L'intérêt de cette quatrième variante est de faire en sorte que l'attaquant ne connaisse pas la sortie de la recombinaison utilisant le théorème du reste chinois. Cette quatrième variante comprend les étapes suivantes :

    1) Tirage de trois nombres aléatoires r, t et u compris entre 0 et 2^s;
    2) Calcul de p'=p*r et q'=q*t;
    3) Remplacer c par c+u*n
    4) Calculer cp=c modulo p' et cq=c modulo q' ;
    5) Calculer dp=d' modulo p-1 et dq=d' modulo q-1 ;
    6) Calculer dp'=(dp-1)/2 et dq'=(dq-1)/2.

7) Calculer mp'=cp^dp' modulo p' et mq'=cq^dq' modulo q' ;

8) Calculer m=((mq-mp)*(p^(-1) mod q) mod q')*p +mp

9) Remplacer m par m^2*c mod n.

Ainsi, l'attaquant ne connaissant pas la sortie de la recombinaison utilisant le théorème du reste chinois correspondant à l'étape 7, l'attaquant ne peut réaliser une attaque DPA sur la recombinaison utilisant le théorème du reste chinois.

La deuxième contre-mesure consiste à rendre aléatoire la recombinaison utilisant le théorème du reste chinois. Le caractère aléatoire provient de l'utilisation de modules de calculs aléatoires. Cette contre-mesure consiste à remplacer les étapes 7 et 8 du procédé de la première contre-mesure par les étapes suivantes. On note k la longueur (en bits) de l'entier p'.

a) Choisir deux entiers aléatoires (a0, b0) tels que b0=a0-1, les entiers a0 et b0 étant de taille k bits ;

b) Calculer l'entier C =(mq-mp)*(p^(-1) mod q) mod q' ;

c) Calculer (c mod a0)=(C*p+cp) mod a0 et (c mod b0)=(C*p+cp) mod b0 ;

d) Calculer deux entiers aléatoires (a1, b1) tels que b1=a1-1, les entiers a1 et b1 étant de taille k bits ;

e) Calculer C=((c mod b0) -(c mod a0)) mod b0 ;

f) Calculer (c mod a1)=(C*a0+(c mod a0)) mod a1 et (c mod b1)=(C*a0+(c mod a0)) mod b1 ;

g) Répéter les étapes e et f pour un nouveau couple (a2, b2) avec b2=a2-1, les entiers a2 et b2 étant de taille k bits. Les entiers (a0,b0) et (a1,b1) sont remplacés respectivement par les entiers (a1,b1) et (a2,b2) ;

h) L'étape g est réitérée k fois, k étant un paramètre entier ;

i) L'étape g est réitérée pour le couple d'entiers (a, b)=(2^k, 2^k-1) ;

j) Calculer l'entier cl défini par cl=c mod 2^k et calculer l'entier ch défini par ch=((c mod 2^k-1)-(c mod 2^k)) mod 2^k-1 ;

k) Calculer la signature c=ch*2^k+cl.

L'application des deux procédés de contre-mesure précédents permet de protéger l'algorithme de déchiffrement sur carte à puce contre des attaques de type DPA. Les deux contre-mesures présentées sont de plus compatibles entre elles : il est possible d'appliquer à l'algorithme de déchiffrement RSA une ou deux des contre-mesures décrites, ainsi que les 4 variantes de la première contre-mesure.

## Revendications

1. Procédé de contre-mesure mis en oeuvre par le microprocesseur électronique en relation avec un terminal, permettant de ne pas dévoiler des informations relatives à des données secrètes par la consommation de courant du microprocesseur exécutant les instructions d'un programme consistant à utiliser un module de calcul aléatoire à chaque nouvelle exécution d'un algorithme de déchiffrement RSA utilisant le théorème du reste chinois ou CRT, ledit procédé consistant à effectuer les calculs modulo p*r et q*t, où r et t sont des nombres aléatoires, ledit procédé prenant en entrée un message c, un exposant de déchiffrement d et un paramètre de sécurité s, **caractérisé en ce qu'**il comprend les huit étapes suivantes :

1) Tirage de trois nombres aléatoires r,t et u compris entre 0 et 2^s ;

2) Calcul de p'=p*r et q'=q*t , p et q étant deux nombres premiers distincts de même taille;

3) Remplacement de c par c+u*n

4) Calcul de cp=c modulo p' et cq=c modulo q' ;

5) Calcul de dp=d' modulo p-1 et dq=d' modulo q-1 ;

6) Calcul de mp'=cp^dp modulo p' et mq'=cq^dq modulo q' ;

7) Calcul de m=((mq-mp)*(p^(-1) mod q) mod q')*p +mp

8) Remplacement de m par m mod n.

2. Procédé de contre-mesure selon la revendication 1, **caractérisé en ce qu'**un compteur T de valeur initiale 0 est incrémenté à chaque nouvelle exécution de l'algorithme, les entiers r et t conservant la même valeur tant que le compteur T n'a pas atteint une limite fixée L, un nouveau couple d'entier r et t étant alors déterminé lorsque cette limite est atteinte.

3. Procédé de contre-mesure selon la revendication 1 permettant de protéger le déchiffrement utilisant le théorème du reste chinois ou CRT, ledit procédé étant **caractérisé en ce que** le calcul de déchiffrement formulé par l'équation : m=c^d mod n, s'effectue en premier lieu modulo p et modulo q, que le résultat du calcul modulo p et modulo q soit ensuite rassemblé en utilisant le théorème du reste chinois ou CRT, et que le calcul se poursuive modulo le module public n.

4. Procédé de contre-mesure suivant la revendication 3, **caractérisé en ce que** ledit calcul de déchiffrement comprend les neuf étapes suivantes :

1) Tirage de trois nombres aléatoires r, t et u compris entre 0 et 2^s ;

2) Calcul de p'=p*r et q'=q*t ;

3) Remplacer c par c+u*n

4) Calculer cp=c modulo p' et cq=c modulo q' ;

5) Calculer dp=d' modulo p-1 et dq=d' modulo q-1 ;
6) Calculer dp'=(dp-1)/2 et dq'=(dq-1)/2.
7) Calculer mp'=cp^dp' modulo p' et mq'=cq^dq' modulo q' ;
8) Calculer m=((mq-mp)*(p^(-1) mod q) mod q') *p +mp
9) Remplacer m par m^2*c mod n.

**5.** Procédé de contre-mesure suivant la revendication 1 consistant à rendre aléatoire le mode de calcul à chaque nouvelle exécution de l'algorithme de déchiffrement utilisant le théorème chinois, ledit procédé de contre-mesure consistant à remplacer les étapes 7 et 8 du procédé par les étapes suivantes, la taille (en bits) de l'entier p' étant notée k :

a) Choisir 2 entiers aléatoires (a0,b0) tels que b0=a0-1, les entiers a0 et b0 étant de taille k bits.
b) Calculer l'entier C = (mq-mp)*(p^(-1) mod q) mod q'.
c) Calculer (c mod a0) = (C*p+cp) mod a0 et (c mod b0)=(C*p+cp) mod b0.
d) Calculer 2 entiers aléatoires (a1,b1) tels que b1=a1-1, les entiers a1 et b1 étant de taille k bits.
e) Calculer C=((c mod b0) - (c mod a0)) mod b0
f) Calculer (c mod a1)=(C*a0+(c mod a0)) mod a1 et (c mod b1)=(C*a0+(c mod a0)) mod b1
g) Répéter les étapes 5 et 6 pour un nouveau couple (a2,b2) avec b2=a2-1, les entiers a2 et b2 étant de taille k bits, les entiers (a0,b0) et (a1,b1) étant remplacés respectivement par les entiers (a1,b1) et (a2,b2).
h) L'étape 7 est réitérée k fois, k étant un paramètre entier.
i) L'étape 7 est réitérée pour le couple d'entier (a,b)=(2^k,2^k-1).
j) Calculer l'entier cl=c mod 2^k et calculer l'entier ch=((c mod 2*k-1)-(c mod 2^k)) mod 2^k-1
k) Calculer la signature c=ch*2^k+cl.

**6.** Carte à puce comprenant un microprocesseur, ledit microprocesseur comprenant des moyens pour mettre en oeuvre les étapes du procédé défini dans les revendications 1 à 6.

**Patentansprüche**

**1.** Vom elektronischen Mikroprozessor im Zusammenhang mit einem Terminal umgesetztes Gegenmaßnahmen-Verfahren, die es erlaubt, Informationen bezüglich geheimer Daten durch den Stromverbrauch des die Anweisungen eines Programms ausführenden Mikroprozessors nicht offen zu legen, das in der Nutzung eines zufälligen Berechnungsmoduls bei jeder neuen Ausführung eines den Satz des Chinesischen Restes oder CRT einsetzenden Dechiffrierungsalgorithmus RSA besteht, wobei das genannte Verfahren in der Ausführung der Berechnungen moduluo p*r und q*t besteht, wobei r und t zufällige Zahlen sind, wobei das genannte Verfahren am Eingang eine Meldung c, einen Dechiffrierungsexponenten d und einen Sicherheitsparameter s aufnimmt, **dadurch gekennzeichnet, dass** es die folgenden acht Stufen umfasst:

1) Ermittlung von drei zufälligen, zwischen 0 und 2^s inbegriffenen Zahlen r, t, und u;
2) Berechnung von p' = p*r und q' = q*t, wobei p und q zwei unterschiedliche Primzahlen derselben Größe sind;
3) Ersatz von c durch c+u*n
4) Berechnung von cp = c modulo p' und cq = c modulo q';
5) Berechnung von dp = d' modulo p-1 und dq = d' modulo q-1;
6) Berechnung von mp' = cp^dp modulo p' und mq' = cq^dq modulo q';
7) Berechnung von m = ((mq - mp)) * (p^(-1) mod q) mod q')*p + mp
8) Ersatz von m durch m mod n.

**2.** Gegenmaßnahmen gemäß Anspruch 1, **dadurch gekennzeichnet**, das ein Zähler T des Anfangswertes 0 bei jeder neuen Ausführung des Algorithmus inkrementiert wird, wobei die ganzen Zahlen r und t denselben Wert beibehalten, solange der Zähler T einen festgelegten Wert L nicht erreicht hat, wobei dann ein neues Paar ganzer Zahlen r und t bestimmt wird, wenn diese Grenze erreicht wird.

**3.** Gegenmaßnahmen-Verfahren gemäß Anspruch 1, das den Schutz der den Satz des Chinesischen Restes oder CRT einsetzende Dechiffrierung erlaubt, wobei das genannte Verfahren **dadurch gekennzeichnet ist, dass** die durch die Gleichung: m = c^d mod n formulierte Dechiffrierungsberechnung zunächst modulo p und modulo q erfolgt, dass das Ergebnis der Berechnung modulo p und modulo q anschließend durch Verwendung des Satzes des Chinesischen Restes oder CRT zusammengestellt wird und dass die Berechnung modulo dem öffentlichen Modul n fortgeführt wird.

**4.** Gegenmaßnahmen-Verfahren gemäß Anspruch 3, **dadurch gekennzeichnet, dass** die genannte Chiffrierungsberechnung die folgenden neun Stufen umfasst:

1) Ermittlung von drei zufälligen, zwischen o und 2^s inbegriffenen Zahlen r, t und u;
2) Berechnung von p' = p*r und q' = q*t;
3) Ersatz von c durch c+u*n

4) Berechnung von cp = c modulo p' und cq = c modulo q';

5) Berechnung von dp = d' modulo p-1 und dq = d' modulo q-1;

6) Berechnung von dp' = (dp-1) / 2 und dq' = (dq - 1) / 2.

7) Berechnung von mp' = cp^dp' modulo p' und mq' = cq^dq' modulo q';

8) Berechnung von m = ((mq - mp) * (p^(-1) mod q) mod q') *p +mp

9) Ersatz von m durch m^2*c mod n.

5. Gegenmaßnahmen-Verfahren gemäß Anspruch 1, das darin besteht, den Berechnungsmodus bei jeder neuen Ausführung des den Satz des Chinesischen Restes benutzenden Dechiffrierungsalgorithmus zufällig zu machen, wobei das genannte Gegenmaßnahmen-Verfahren im Ersatz der Stufen 7 und 8 des Verfahrens durch die folgenden Stufen besteht, wobei die Größe (in Bits) der ganzen Zahl p' mit k bezeichnet wird:

a) Auswahl von 2 zufälligen ganzen Zahlen (a0, b0), wie zum Beispiel b0 = a0 - 1, wobei die ganzen Zahlen a0 und b0 die Größe von k Bits haben.

b) Berechnung der ganzen Zahl C = (mq - mp) * (p^(-1) mod q) mod q'.

c)Berechnung von (c mod a0) = (C*p + cp) mod a0 und (c mod b0) = (C*p + cp) mod b0.

d) Berechnung von 2 zufälligen ganzen Zahlen (a1, b1), wie zum Beispiel b1 = a1-1, wobei die ganzen Zahlen a1 und b1 die Größe k Bits haben.

e) Berechnung von C = ((c mod b0) - (c mod a0)) mod b0

f) Berechnung von (c mod q1) = ((C*a0 + (c mod ao) mod a1 und (c mod b1) = (C*ao + (c mod a0) mod b1

g) Wiederholung der Stufen 5 und 6 für ein neues Paar (a2, b2) mit b2 = a2 - 1, wobei die ganzen Zahlen a2 und b2 die Größe k Bits haben, wobei die ganzen Zahlen (a0, b0) und (a1, b1) jeweils durch die ganzen Zahlen (a1, b1) und (a2, b2) ersetzt werden.

h) Die Stufe 7 wird k Mal wiederholt, wobei k ein ganzer Parameter ist.

i) Die Stufe 7 wird bei dem Paar ganzer Zahlen (a, b) = (2^k, 2^k-1) wiederholt.

j) Berechnung der ganzen Zahl c1 = c mod 2^k und Berechnung der ganzen Zahl ch = ((c mod 2^k - 1) - (c mod 2^k)) mod 2^k-1

k) Berechnung der Unterschrift c = ch*2^k + cl.

6. Chipkarte mit einem Mikroprozessor, wobei der genannte Mikroprozessor Mittel umfasst, um die Stufen des in den Ansprüchen 1 bis 6 definierten Verfahrens umzusetzen.

**Claims**

1. A countermeasure method used by the electronic microprocessor connected with a terminal, making it possible not to disclose information relating to secret data through the current consumption of the microprocessor executing the instructions of a program consisting of using a random calculation modulus at each new execution of an RSA deciphering algorithm using the Chinese Remainder Theorem or CRT, the said method consisting of performing the calculations modulo p*r and q*t, where r and t are random numbers, the said method taking as an input a message c, a deciphering exponent d and a security parameter s, **characterised in that** it comprises the following eight steps:

1) Drawing three random numbers r, t and u lying between 0 and 2^s;
2) Calculating p'=p*r and q'=q*t, p and q being two distinct prime numbers of the same size;
3) Replacing c with c+u*n;
4) Calculating cp=c modulo p' and cq=c modulo q';
5) Calculating dp=d' modulo p-1 and dq=d' modulo q-1;
6) Calculating mp'=cp^dp modulo p' and mq'=cq^dq modulo q';
7) Calculating m=((mq-mp)*(p^(-1) mod q) mod q')*p+mp;
8) Replacing m with m mod n.

2. A countermeasure method according to Claim 1, **characterised in that** a counter T with an initial value 0 is incremented at each new execution of the algorithm, the integers r and t keeping the same value as long as the counter T has not reached a fixed limit L, a new pair of integers r and t then being determined when this limit is reached.

3. A countermeasure method according to Claim 1 protecting the deciphering using the Chinese Remainder Theorem or CRT, the said method being **characterised in that** the deciphering calculation formulated by the equation: m=c^d mod n is effected firstly modulo p and modulo q, **in that** the result of the calculation modulo p and modulo q is then gathered together using the Chinese Remainder Theorem or CRT, and **in that** the calculation continues modulo the public modulus n.

4. A countermeasure method according to Claim 3, **characterised in that** the said deciphering calculation comprises the following nine steps :

1) Drawing three random numbers r, t and u lying between 0 and 2^s;
2) Calculating p'=p*r and q'=q*t;

3) Replacing c with c+u*n;
4) Calculating cp=c modulo p' and cq=c modulo q';
5) Calculating dp=d' modulo p-1 and dq=d' modulo q-1;
6) Calculate dp'=(dp-1)/2 and dq'=(dq-1)/2;
7) Calculating mp'=cp^dp modulo p' and mq'=cq^dq modulo q';
8) Calculating m=((mq-mp)*(p^(-1) mod q) mod q')*p+mp;
9) Replacing m with m^2*c mod n.

5. A countermeasure method according to Claim 1, consisting of making random the calculation method at each new execution of the deciphering algorithm using the Chinese Theorem, the said countermeasure method consisting of replacing steps 7 and 8 of the method with the following steps, the size (in bits) of the integer p' being denoted k :

   a) Choosing two random integers (a0, b0) such that b0=a0-1, the integers a0 and b0 being of size k bits;
   b) Calculating the integer C = (mq-mp)*(p^(-1) mod q) mod q';
   c) Calculating (c mod a0)=C*p+cp) mod a0 and (c mod b0)=(C*p+cp) mod b0;
   d) Calculating two random integers (a1, b1) such that b1=a1-1, the integers a1 and b1 being of size k bits;
   e) Calculating C=((c mod b0) - (c mod a0)) mod b0;
   f) Calculating (c mod a1)=c*a0+(c mod a0)) mod a1 and (c mod b1)=C*a0+(c mod a0)) mod b1;
   g) Repeating steps 5 and 6 for a new pair (a2, b2) with b2=a2-1, the integers a2 and b2 being of size k bits, the integers (a0, b0) and (a1, b1) being replaced respectively by the integers (a1, b1) and (a2, b2);
   h) Step 7 is reiterated k times, k being an integer parameter;
   i) Step 7 is reiterated for the pair of integers (a, b)=(2^k, 2^k-1);
   j) Calculating the integer c1=c mod 2^k and calculating the integer ch=((c mod 2^k-1)-(c mod 2^k)) mod 2^k-1;
   k) Calculating the signature c=ch*2^k+cl.

6. A chip card comprising a microprocessor, the said microprocessor comprising means for implementing the steps of the method defined in Claims 1 to 6.